# EUROPEAN PATENT APPLICATION

(11) **EP 2 985 954 A1**
(43) Date of publication of application: **17.02.2016**
(21) Application number: 13881764.8
(22) Date of filing: 13.09.2013
(51) Int. Cl.: H04L 12/28, H04L 29/06, H04L 9/32

(54) **SECURE NETWORK ACCESS PROCESSING METHOD AND APPARATUS**

(30) Priority: 08.04.2013 CN 201310119775
(71) Applicant: ZTE Corporation, Guangdong Province 518057 (CN)
(72) Inventor: ZHANG, Junjian, Shenzhen Guangdong Province 518057 (CN); ZHANG, Weiliang, Shenzhen Guangdong Province 518057 (CN); XU, Aijun, Shenzhen Guangdong Province 518057 (CN); CHEN, Wu, Shenzhen Guangdong Province 518057 (CN)
(74) Representative: Novagraaf Technologies
(86) International application number: PCT/CN2013/083483
(87) International publication number: WO 2014/166206

(57) **Abstract**

Provided are a method and device for accessing a secure network. The method includes that: a new node which intends to access a secure network triggers a function of configuring security parameters automatically; and the new node accesses the secure network according to the security parameters configured automatically. Through the present disclosure, the problem in the related art that low security is brought when a user does not configure security parameters manually while poor user experience exists when the user configures the security parameters manually is solved, thereby achieving the effect that security parameters of an accessed secure network can be configured without manual configuration and user experience is improved effectively.

## Description

### Technical Field

The present disclosure relates to the field of communications, including a method and device for accessing a secure network.

### Background

G.hn standards defined a general home networking technology that may use a power line, a telephone line and a coaxial cable as a medium to transmit data. The concept of "domain" of a logical network is defined by G.hn and each domain includes a Domain Master (DM) and a least one Node. The DM undertakes management tasks including access, exit, authentication and broadband distribution and so on of other nodes in the domain. The DM broadcasts a Medium Access Plan (MAP) message frame periodically. The message includes domain name information corresponding to the DM, and a node physically connected with the DM is able to receive this MAP frame. A new node that has not accessed the domain can also receive the MAP frame, and judges, through the domain name information in the MAP domain, whether to access the domain or not.

From the perspective of security, a domain can work under two modes: a security domain and a non-security domain. A G.hn device working in the security domain uses an encryption mechanism formed by a Counter Mode Cipher Block Chaining Message Authentication Code Protocol (CCMP) or an Advanced Encryption Standard (AES) algorithm to ensure that communication data of a user is not leaked. The security mode in which the domain works is determined by a DM in a G.hn network. If a new node needs to access a domain working in the security mode, the new node needs to register to a DM, and a Security Controller (SC) node (the SC node is the DM in some cases) further needs to perform a Password (PW)-based authentication process to the new node after the new node registers successfully, and communication may be performed with a node in the domain only after the new node passes the authentication.

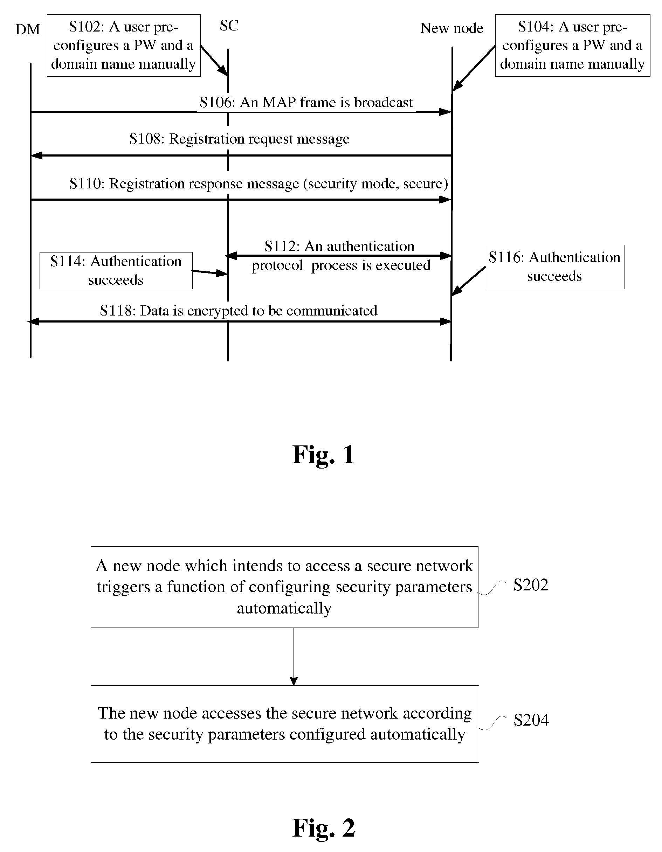

Fig. 1 is a flowchart of a process of accessing a secure network according to parameters configured manually as specified by G.hn standards. A new node is a G.hn device going to access a network, and an SC is a security controller in the network. As shown in Fig. 1, the process of accessing the security network includes the following steps:
Step 102: A user logs in a web configuration page of an SC node and inputs domain name information and PW parameters.
Step 104: The user logs in a web configuration page of a new node and configures domain name information and PW parameters. The configured domain name information and values of the PW parameters are the same as those configured on the SC.
Step 106: After being powered on, the new node will intercept MAP frames sent by all DMs. The MAP frames will carry fields of domain name information corresponding to the DMs. The new node finds an MAP frame whose field of domain name information is the domain name information configured in Step 104, and applies to a DM sending this MAP frame for accessing the domain.
Step 108: The new node sends a registration request message to the DM to request for accessing the domain.
Step 110: The DM will return a registration response message if granting the request of the new node. A field of a security mode in the registration response message is set as 1, which indicates that the domain works in the security mode. A security field includes information of an SC in the domain.
Step 112: After receiving the registration response message indicating a registration success, the new node will send an authentication request to the SC designated in Step 110, and then the new node and the SC execute an authentication protocol process by using preconfigured PW parameters. The authentication protocol process is a PW-based authentication protocol specified in the G.hn standards.
Step 114: After the authentication succeeds, the SC installs a data encryption key negotiated by the authentication protocol to encrypt subsequent communication data.
Step 116: After the authentication succeeds, the new node install a data encryption key negotiated by the authentication protocol to encrypt subsequent communication data.
Step 118: The data encryption key is used in communication between the new node and other nodes in the domain to ensure that data is not leaked.

When the user does not configure domain name information and PW parameters manually, a device can only work in a non-security domain after being powered on, data of a link layer for communication is not encrypted, and there is risk of leakage of data information.

Therefore, there is a problem in the related art that low security is brought when a user does not configure security parameters manually while poor user experience exists when the user configures the security parameters manually.

### Summary

A method and device for accessing a secure network is provided in the present disclosure, so as to at least solve the problem in the related art that low security is brought when a user does not configure security parameters manually while poor user experience exists when the user configures the security parameters manually.

According to a first aspect of the present disclosure, a method for accessing a secure network is provided, comprising: triggering, by a new node which intends to access the secure network, a function of configuring security parameters automatically; accessing, by the new node, the secure network according to the security parameters configured automatically.

In an example embodiment, accessing, by the new node, the secure network according to the security parameters configured automatically comprises: detecting, by the new node, whether there is a secure network satisfying a preset access condition in a preset period of time; when the secure network satisfying the preset access condition is detected in the preset period of time, executing, by the new node according to interaction with a first node in the detected secure network, registration and authentication flows of accessing the secure network; and/or when the secure network satisfying the preset access condition is not detected in the preset period of time, establishing, by the new node functioning as a Domain Master, DM, a secure network.

In an example embodiment, executing, by the new node according to the interaction with the first node in the detected secure network, the registration and authentication flows of accessing the secure network comprises: after receiving a notification message sent from the first node, executing, by the new node, the registration flow of accessing the secure network, wherein the notification message is used for notifying the new node that the first node has entered a Security Controller, SC, state configured automatically; after receiving a registration success message, executing, by the new node, the authentication flow of accessing the secure network.

According to a second aspect of the present disclosure, a method for accessing a secure network is provided, comprising: triggering, by a first node in the secure network, a function of configuring security parameters automatically; sending, by the first node, a first notification message to a new node which intends to access the secure network, wherein the first notification message is used for notifying the new node that the first node has entered a Security Controller, SC, state configured automatically, and the new node having also triggered the function of configuring security parameters automatically accesses the secure network according to the security parameters configured automatically.

In an example embodiment, after sending, by the first node, the first notification message to the new node which intends to access the secure network, the method further comprises: determining, by the first node, that registration for the new node to access the secure network is carried out successfully; sending, by the first node, a second notification message to the new node, wherein the second notification message is used for notifying that the registration for the new node to access the secure network is carried out successfully.

In an example embodiment, when the first node is not a Domain Master, DM, after triggering, by the first node in the secure network, the function of configuring the security parameters automatically, the method further comprises: sending a third notification message to the DM in the secure network, wherein the third notification message is used for notifying the DM that the first node has entered the SC state configured automatically.

According to a third aspect of the present disclosure, a device for accessing a secure network is provided, applied in a new node which intends to access the secure network, comprising: a first triggering component, configured to trigger a function of configuring security parameters automatically; a first accessing component, configured to access the secure network according to the security parameters configured automatically.

In an example embodiment, the first accessing component comprises: a first detecting element, configured to detect whether there is a secure network satisfying a preset access condition in a preset period of time; a first executing element, configured to execute, when the secure network satisfying the preset access condition is detected in the preset period of time and according to interaction with a first node in the detected secure network, registration and authentication flows of accessing the secure network; and/or a first establishing element, configured to function as a Domain Master, DM, to establish a secure network when the secure network satisfying the preset access condition is not detected in the preset period of time.

In an example embodiment, the first executing element comprises: a first executing sub-element, configured to execute, after receiving a notification message sent from the first node, the registration flow of accessing the secure network, wherein the notification message is used for notifying the new node that the first node has entered a Security Controller, SC, state configured automatically; a second executing sub-element, configured to execute, after receiving a registration success message, the authentication flow of accessing the secure network.

According to a fourth aspect of the present disclosure, a device for accessing a secure network is provided, applied in a first node in the secure network, comprising: a second triggering component, configured to trigger a function of configuring security parameters automatically; a first sending component, configured to send a first notification message to a new node which intends to access the secure network, wherein the first notification message is used for notifying the new node that the first node has entered a Security Controller, SC, state configured automatically; and the new node having also triggered the function of configuring security parameters automatically accesses the secure network according to the security parameters configured automatically.

In an example embodiment, the device further comprises: a first determining component, configured to determine, after the first node sends the first notification message to the new node which intends to access the secure network, that registration for the new node to access the secure network is carried out successfully; a second sending component, configured to send a second notification message to the new node, wherein the second notification message is used for notifying that the registration for the new node to access the secure network is carried out successfully.

In an example embodiment, the device further comprises: a third sending component, configured to send, when the first node is not a Domain Master, DM, and after the first node in the secure network triggers the function of configuring the security parameters automatically, a third notification message to the DM in the secure network, wherein the third notification message is used for notifying the DM that the first node has entered the SC state configured automatically.

By means of the present disclosure, a new node to access the secure network triggers a function of configuring security parameters automatically, and the new node accesses the secure network according to the security parameters configured automatically, thereby solving the problem in the related art that low security is brought when a user does not configure security parameters manually while poor user experience exists when the user configures the security parameters manually, and further achieving the effect that security parameters for accessing the secure network can be configured without manual configuration and user experience is improved effectively.

### Brief Description of the Drawings

The accompanying drawings illustrated herein are used for providing further understanding to the present disclosure and constitute a part of the application. The exemplary embodiments of the present disclosure and illustration thereof are used for explaining the present disclosure, instead of constituting improper limitation to the present disclosure. In the accompanying drawings:
Fig. 1 is a flowchart of a process of accessing a secure network according to parameters configured manually as specified by G.hn standards;
Fig. 2 is the first flowchart of a method for accessing to a secure network according to an embodiment of the present disclosure;
Fig. 3 is the second flowchart of a method for accessing the secure network according to an embodiment of the present disclosure;
Fig. 4 is a structural block diagram of a device one for accessing the secure network according to an embodiment of the present disclosure;
Fig. 5 is an example structural block diagram of the first accessing component 44 in the device one for accessing the secure network according to an embodiment of the present disclosure;
Fig. 6 is an example structural block diagram of the first executing element 54 in the first accessing component 44 in the device one for accessing the secure network according to an embodiment of the present disclosure;
Fig. 7 is a structural block diagram of the device second for accessing the secure network according to an embodiment of the present disclosure;
Fig. 8 is the first example structural block diagram of the device second for accessing the secure network according to an embodiment of the present disclosure;
Fig. 9 is the second example structural block diagram of the device second for accessing the secure network according to an embodiment of the present disclosure;
Fig. 10 is a structural diagram of a system of a device for accessing a secure network compatible with a manual configuration mode according to an embodiment of the present disclosure;
Fig. 11 is the first flowchart of a method for accessing a secure network according to an example embodiment of the present disclosure;
Fig. 12 is the second flowchart of a method for accessing a secure network according to an example embodiment of the present disclosure; and
Fig. 13 is the third flowchart of a method for accessing a secure network according to an example embodiment of the present disclosure.

### Detailed Description of the Embodiments

The present disclosure will be expounded hereinafter with reference to the accompanying drawings and in conjunction with embodiments. It needs to be noted that the embodiments in the application and the characteristics in the embodiments may be combined with each other if there is no conflict.

A method for accessing a network access is provided in the present embodiment. Fig. 2 is the first flowchart of a method for accessing to a secure network according to an embodiment of the present disclosure. As shown in Fig. 2, the flow includes the following steps:
Step 202: A new node which intends to access the secure network triggers a function of configuring security parameters automatically.
Step 204: The new node accesses the secure network according to the security parameters configured automatically.

Through the steps above, the function of configuring the security parameters automatically is triggered to trigger the configuration of the security parameters. Compared with the low security brought when a G.hn device accesses a network without turning on a security function, and complicated operation as well as poor user experience existing when security parameters can be set only by logging in a management and configuration page manually when a secure network is accessed in the related art, the method of accessing the secure network by the security parameters configured automatically solves the problem that low security is brought when a user does not configure security parameters manually while poor user experience exists when the user configures the security parameters manually, thus achieving the effect that security parameters of an accessed secure network can be configured without manual configuration and user experience is improved effectively.

When accessing the secure network according to the security parameters configured automatically, the new node may access, according to different network environments, the secure network by applying different methods for accessing the secure network. For example, a preset period of time is set after the new node triggers the function of configuring the security parameters automatically. Subsequently, the new node detects whether there is a secure network satisfying a preset access condition in the preset period of time. In the case that the secure network satisfying the preset access condition is detected in the preset period of time, the new node executes, according to interaction with a first node in the detected secure network, registration and authentication flows of accessing the secure network; and in the case that the secure network satisfying the preset access condition is not detected in the preset period of time, the new node functions as a DM to establish a secure network. It needs to be pointed out that the preset condition may be different according to access requirements of the new node, and may be determined according to different access requirements of the new node.

In the case that the secure network accessed by the new node exists, the operation that the new node executes, according to the interaction with the first node of the detected secure network, the registration and authentication flows of accessing the secure network, includes that after receiving a notification message sent from a first node, the new node executes the registration flow of accessing the secure network, wherein the notification message is used for notifying the new node that the first node has entered an SC state configured automatically; after receiving a registration success message, the new node executes the authentication flow of accessing the secure network. It needs to be noted that, when the first node in the secure network and a DM in the secure network are different nodes, the new node interacts with the DM to complete the registration flow of accessing the secure network while the new node interacts with the first node to complete the authentication flow of accessing the secure network. Besides, the notification message received by the new node from the first node carries a domain name and the DM of the secure network, and the first node also sends a notification to notify the DM that the first node has entered an SC state configured automatically. However, when the first node in the secure network and the DM in the secure network are the same nodes, the executed registration flow and authentication flow are completed by the same node and the interaction between the DM and the first node to notify a state of each other may be omitted.

In the case that there is no secure network accessed by the new node, the new node in a network access state configured automatically establishes a new network and functions as a DM in the new network. The new node functioning as a DM is switched to an SC state configured automatically, and cooperates a subsequent new user to access the newly-established secure network.

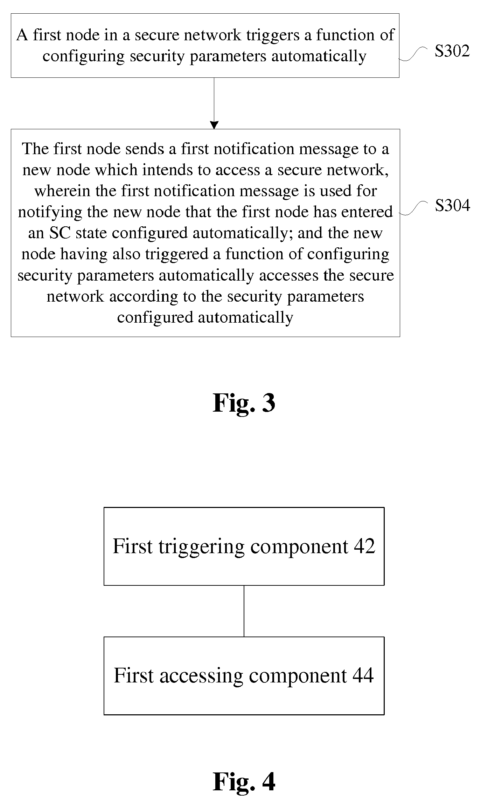

A method for accessing a secure network is further provided in the present embodiment. Fig. 3 is the second flowchart of a method for accessing the secure network according to an embodiment of the present disclosure. As shown in Fig. 3, the flow includes the following steps:
Step 302: A first node in the secure network triggers a function of configuring security parameters automatically.
Step 304: The first node sends a first notification message to a new node which intends to access the secure network, wherein the first notification message is used for notifying the new node that the first node has entered an SC state configured automatically; and the new node having also triggered the function of configuring security parameters automatically accesses the secure network according to the security parameters configured automatically.

By means of the steps above, the first node in the secure network triggers the function of configuring the security parameters automatically to trigger the configuration of the security parameters, while the new node having also triggered the function of automatically configuring the security parameters accesses the secure network according to the security parameters configured automatically. Compared with the low security brought when a G.hn device accesses a network without turning on a security function, and complicated operation as well as poor user experience existing when security parameters can be set only by logging in a management and configuration page manually when a secure network is accessed in the related art, the method for accessing the secure network by the security parameters configured automatically solves the problem that low security is brought when a user does not configure security parameters manually while poor user experience exists when the user configures the security parameters manually, thus achieving the effect that security parameters of an accessed secure network can be configured without manual configuration and user experience is improved effectively.

In an optional example, after the first node sends the first notification message to the new node which intends to access the secure network, the method further includes that: the first node determines that registration for the new node to access the secure network is carried out successfully; afterwards, the first node sends a second notification message to the new node, wherein the second notification message is used for notifying that the registration for the new node to access the secure network is carried out successfully, thereby ensuring to a certain extent that the new node can perform a subsequent authentication flow with the first node.

It needs to be noted that, when the first node determines that the registration for the new node to access the secure network is carried out successfully, different processing methods may be applied according to different network environments where the first node locates. For example, when the first node in the secure network and a DM are the same node, the same node may determine, according to a registration interaction flow with the new node, whether the new node accesses the secure network successfully. When the first node in the secure network and the DM are different nodes, the first node may determine, by receiving a registration success message sent by the DM, that the registration flow of the new node succeeds. Besides, in the case that the first node and the DM are not the same node, after the first node in the secure network triggers the function of configuring the security parameters automatically, the method further includes that a third notification message is sent to the DM in the secure network, wherein the third notification message is used for notifying the DM that the first node has entered the SC state configured automatically.

A device for accessing a secure network is further provided in the present embodiment. The device is configured to achieve the foregoing embodiments and example embodiments, and what has been described will not be repeated. As used blow, the term "component" may implement a combination of software and/or software having a predetermined function. Although the device described in the following embodiments are preferably implemented by software, implementation using hardware or a combination of software and hardware is also possible and conceived.

A device for accessing the secure network is further provided in the present embodiment. Fig. 4 is a structural block diagram of a device one for accessing the secure network according to an embodiment of the present disclosure. As shown in Fig. 4, the device is applied in a new node which intends to access the secure network, including: a first triggering component 42 and a first accessing component 44. The device will be described below.

The first triggering component 42 is configured to trigger a function of configuring security parameters automatically. The first accessing component 44 is connected to the first triggering component 42 and configured to access the secure network according to the security parameters configured automatically.

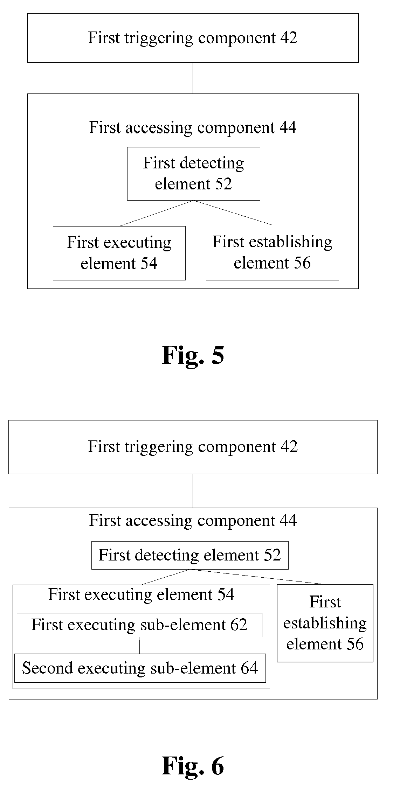

Fig. 5 is an example structural block diagram of the first accessing component 44 in the device one for accessing the secure network according to an embodiment of the present disclosure. As shown in Fig. 5, the first accessing component 44 includes: a first detecting element 52, a first executing module 54 and/or a first establishing element 56. The first accessing component 44 will be described below.

The first detecting module 52 is configured to detect whether there is a secure network satisfying a preset access condition in a preset period of time. The first executing element 54 is connected to the first detecting element 52 and configured to execute, when the secure network satisfying the preset access condition is detected in the preset period of time and according to interaction with a first node in the detected secure network, registration and authentication flows of accessing the secure network; and/or the first establishing element 56 is connected to the first detecting element 52 and configured to function as a DM to establish a secure network when the secure network satisfying the preset access condition is not detected in the preset period of time.

Fig. 6 is an example structural block diagram of the first executing element 54 in the first accessing component 44 in the device one for accessing the secure network according to an embodiment of the present disclosure. As shown in Fig. 6, the first executing element 54 includes: a first executing sub-element 62, configured to execute, after receiving a notification message sent from the first node, the registration flow of accessing the secure network, wherein the notification message is used for notifying the new node that the first node has entered an SC state configured automatically; a second executing sub-element 64, configured to execute, after receiving a registration success message, the authentication flow of accessing the secure network.

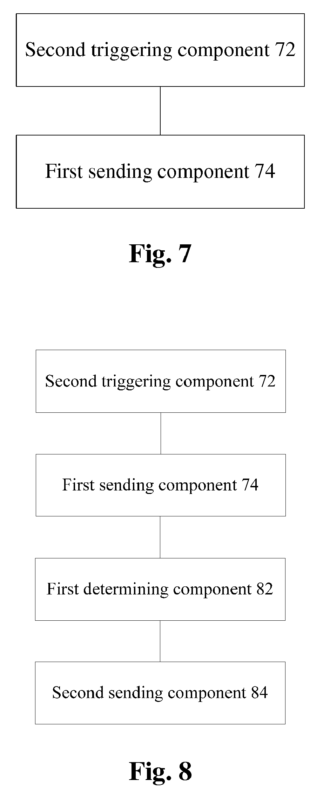

A device for accessing a secure network access is further provided in the present embodiment. Fig. 7 is a structural block diagram of the device second for accessing the secure network according to an embodiment of the present disclosure. As shown in Fig. 7, the device is applied in a first node in a secure network and includes: a second triggering component 72 and a first sending component 74. The device will be described below.

The second triggering component 72 is configured to trigger a function of configuring security parameters automatically. The first sending component 74 is connected to the second triggering component 72 and configured to send a first notification message to a new node which intends to access the secure network, wherein the first notification message is used for notifying the new node that the first node has entered an SC state configured automatically. The new node having also triggered the function of configuring security parameters automatically accesses the secure network according to the security parameters configured automatically.

Fig. 8 is the first example structural block diagram of the device second for accessing the secure network according to an embodiment of the present disclosure. As shown in Fig. 8, the device further includes a first determining component 82 and a second sending component 84 besides all components in Fig. 7. The first determining component 82 is connected to the first sending component 74 and configured to determine, after the first node sends the first notification message to the new node which intends to access the secure network, that registration for the new node to access the secure network is carried out successfully; the second sending component 84 is connected to the first determining component 82 and configured to send a second notification message to the new node, wherein the second notification message is used for notifying that the registration for the new node to access the secure network is carried out successfully.

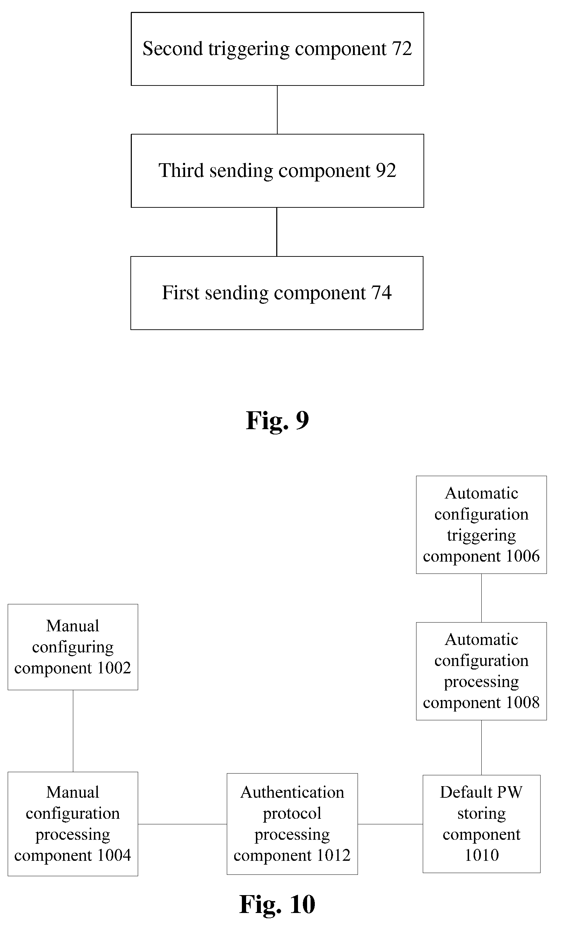

Fig. 9 is the second example structural block diagram of the device second for accessing the secure network according to an embodiment of the present disclosure. As shown in Fig. 9, the device further includes a third sending component 92 besides all components in Fig. 7. The device will be described below.

The third sending component 92 is connected to the second triggering component 72 and the first sending component 74 and configured to send, in the case that the first node is not a DM and after the first node in the secure network triggers the function of configuring the security parameters automatically, a third notification message to the DM in the secure network, wherein the third notification message is used for notifying the DM that the first node has entered the SC state configured automatically.

In the related art, a G.hn device starts a function of a security domain function, and a user can only log in a management and configuration page manually to set a domain name and PW parameters to the device so as to turn on functions of the security domain. User experience is reduced by such complicated operation and many ordinary family users do not turn on the functions of the security domain in order to facilitate operation, thereby greatly reducing the security. Directed at the problem in the related art that low security is brought when a user does not configure security parameters manually while poor user experience exists when the user configures the security parameters manually, a method is provided in the present embodiment, so as to start a data encryption and decryption function of a link layer without the necessity of configuring domain name information and PW parameters manually for an ordinary family user.

It needs to be noted that, in a method for accessing a secure network without configuring a domain name and PW parameters manually by a user according to the embodiments and example embodiments, each G.hn device is allocated with the same default PW parameters when leaving factories. The parameters are stored in a fixed memory, and cannot be deleted by a power-off or resetting operation. Besides, the embodiments and example embodiments may be combined with a method of manual user configuration in the related art, that is, the embodiments and example embodiments are well compatible with the method of manual user configuration in the related art.

Fig. 10 is a structural diagram of a system of a device for accessing a secure network compatible with a manual configuration mode according to an embodiment of the present disclosure. As shown in Fig. 10, the system includes a manual configuration structure and an automatic configuration structure, wherein the manual configuration structure is similar to processing in the related art and includes: a manual configuring component 1002, a manual configuration processing component 1004, and an authentication protocol processing component 1012 while the automatic configuration structure includes: a default PW storing component 1010 (similar to a default storage component of the device in the related), an automatic configuration triggering component 1006 (with functions equivalent to those of the first triggering component 42 and the second triggering component 72), an automatic configuration processing module 1008 and an authentication protocol processing component 1012 (a combination of the two has functions equivalent to those of the first accessing component 44), wherein the two mode may share one authentication protocol processing component 1012. The device will be described below.

The manual configuring component 1002 is configured to receive domain name information and PW parameters configured by a user.

The manual configuration processing component 1004 is connected to the manual configuring component 1002 and the authentication protocol processing component 1012, and configured to execute a registration protocol process specified by the G.hn standards in Fig. 1, after registration succeeds, deliver the PW parameters received by the manual configuring component 1002 to the authentication protocol processing component 1012, and notify the authentication protocol processing component 1012 to execute an authentication process.

The automatic configuration triggering component 1006 is configured to trigger the G.hn device to execute a method for accessing a secure network according to parameters configured automatically.

The automatic configuration triggering component 1006 may implement the triggering function by setting a button on the G.hn device, and the button may be a physical button on a housing of the device and may be also a virtual button of a software dialog box.

The automatic configuration processing module 1008 is connected to the automatic configuration triggering component 1006, the default PW storing component 1010 and the authentication protocol processing component 1012, and is configured to execute a registration process of automatic parameter configuration, and send an instruction to the default PW storing component 1010 after the registration succeeds.

The default PW storing component 1010 is connected to the automatic configuration processing module 1008 and the authentication protocol processing component 1012, and is configured to receive the instruction of the automatic configuration processing module 1008, deliver stored default PW parameters to the authentication protocol processing component 1012 after receiving the instruction, and notify the authentication protocol processing component 1012 to execute an authentication process. Each G.hn device is allocated with the same default PW parameters when leaving the factory.

The authentication protocol processing component 1012 is connected to the manual configuration processing component 1004, the automatic configuration processing module 1008 and the default PW storing component 1010, and is configured to execute a PW-based authentication protocol process specified by the G.hn standards.

After being powered on, the device for accessing the secure network is provided in the embodiment of the present disclosure, the functions of the manual configuring component 1002, the manual configuration processing component 1004 and the authentication protocol processing component 1012 are executed when a process for accessing a secure network according to parameters configured manually as specific by the G.hn standards as shown in Fig. 1 is executed, and the functions of the automatic configuration triggering component 1006, the automatic configuration processing module 1008 and the authentication protocol processing component 1012 are executed if the user does not configure the parameters and uses a method for accessing a secure network according to parameters configured automatically.

Description will be provided below in combination with preferred embodiments.

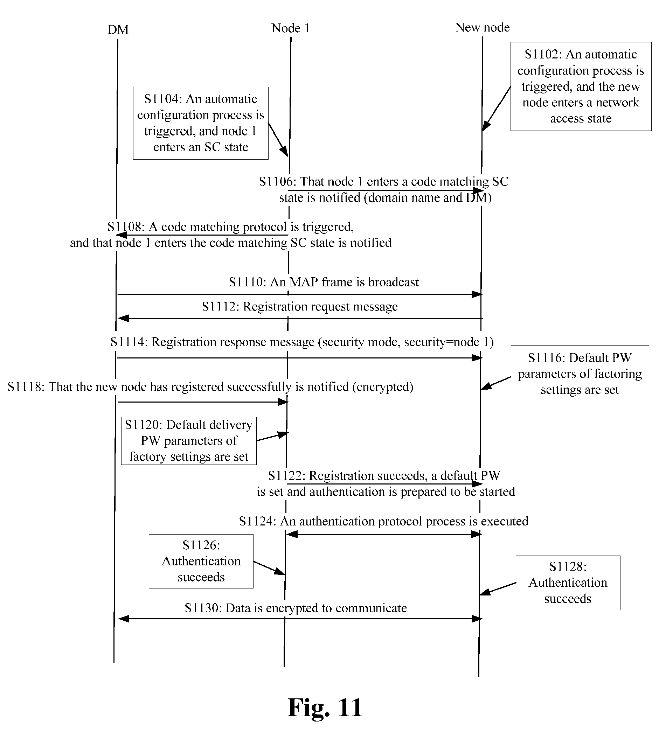

Fig. 11 is the first flowchart of a method for accessing a secure network according to an example embodiment of the present disclosure. A network has been established by Node 1 (i.e. the first node) and a DM, a new node is going to access the network, and an access method of automatic configuring parameters is triggered on node 1 and the new node. As shown in Fig. 11, the flow includes the following steps:
Step 1102: An automatic configuration process is triggered on the new node and the new node enters a network access state.
Step 1104: An automatic configuration process is triggered on node 1 and node 1 enters an SC state.
Step 1106: Node 1 sends to the new node a notification message indicating that node 1 enters the SC state. The notification message includes domain name information of a domain where node 1 locates and information of the DM.
Step 1108: Node 1 in the SC state sends to the DM a notification message indicating that node 1 enters the SC state. The notification message includes information indicating that node 1 enters the SC state.
Step 1110: The DM broadcasts an MAP frame periodically. The MAP frame includes domain name information corresponding to the DM.
Step 1112: After receiving the MAP frame, the new node compares the domain name information in the MAP frame with the domain name information received in Step 1106, and if they are the same, sends a registration request message to the DM.
Step 1114: The DM will return a registration response message if granting the registration request of the new node. A field of a security mode in the registration response message is set as 1, which indicates that the domain works in the security mode. A security field includes information of an SC in the domain. A security field is set as device information of node 1 in the present embodiment.
Step 1116: After receiving the registration response message indicating a registration success, the new node invokes the default PW parameters stored in the default PW storing component 1010 in Fig. 10.
Step 1118: The DM sends to node 1 a notification message indicating that the new node has registered successfully. The notification message includes device information of the new node, and identification information indicating that the new node has registered successfully. Since node 1 and the DM are in the same secure network, the notification message may be encrypted.
Step 1120: After receiving the registration response message indicating the registration success, node 1 invokes the default PW parameters stored in the default PW storing component 1010 in Fig. 10.
Step 1122: Node 1 sends an authentication protocol start notification message, wherein the authentication protocol start notification message includes identification information indicating that security parameters have been configured.
Step 1124: After receiving the message sent by node 1, the new node sends an authentication request to node 1, and then the new node and node 1 execute an authentication protocol process which is a PW-based authentication protocol specified by G.hn standards.
Step 1126: After the authentication succeeds, node 1 installs a data encryption key negotiated by the authentication protocol so as to encrypt subsequent communication data.
Step 1128: After the authentication succeeds, the new node installs the data encryption key negotiated by the authentication protocol so as to encrypt subsequent communication data.
Step 1130: The data encryption key is applied in communication between the new node and other nodes in the domain so as to ensure that data are not leaked.

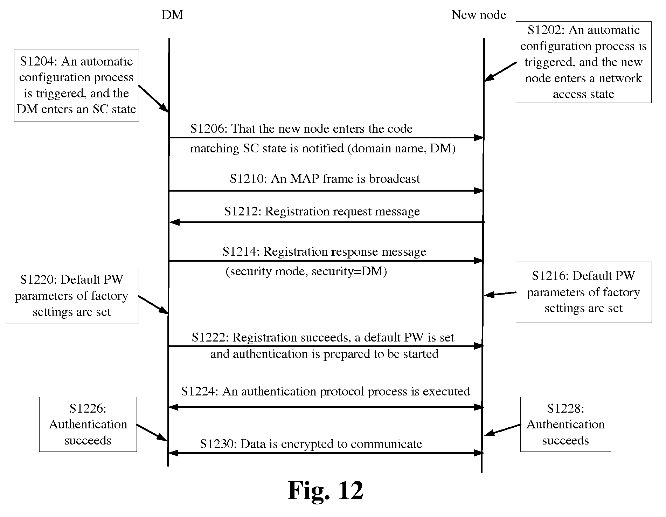

Fig. 12 is the second flowchart of a method for accessing a secure network according to an example embodiment of the present disclosure. A DM has established a network, a new node is going to access the network, and an access method of automatic configuration is triggered on the DM and the new node. Since an automatic configuration process is triggered on the DM, the DM functions as an SC to execute the flow. As shown in Fig 12, the flow includes the following steps:
Step 1202: The automatic configuration process is triggered on the new node and the new node enters a network access state.
Step 1204: The automatic configuration process is triggered on the DM and the DM enters an SC state.
Step 1206: The DM in the SC state sends to the new node a notification message indicating that the DM enters the SC state. The notification message includes domain name information of a domain where the DM locates.
Step 1210: The DM broadcasts an MAP frame periodically. The MAP frame includes domain name information corresponding to the DM.
Step 1212: After receiving the MAP frame, the new node compares the domain name information in the MAP frame with the domain name information received in Step 1206, and if they are the same, sends a registration request message to the DM.
Step 1214: The DM will return a registration response message if granting the registration request of the new node. A field of a security mode in the registration response message is set as 1, which indicates that the domain works in the security mode. A security field includes information of an SC in the domain. The security field is set as device information of the DM in the present embodiment.
Step 1216: After receiving the registration response message indicating a registration success, the new node invokes the default PW parameters stored in the default PW storing component 1010 in Fig. 10.
Step 1220: After sending the registration response message indicating the registration success, the DM invokes the default PW parameters stored in the default PW storing component 1010 in Fig. 10.
Step 1222: The DM sends an authentication protocol start notification message including identification information indicating that security parameters have been configured.
Step 1224: After receiving the message sent by the DM, the new node sends an authentication request to the DM, and then the new node and the DM execute an authentication protocol process which is a PW-based authentication protocol specified by G.hn standards.
Step 1226: After the authentication succeeds, the DM installs a data encryption key negotiated by the authentication protocol so as to encrypt subsequent communication data.
Step 1128: After the authentication succeeds, the new node installs the data encryption key negotiated by the authentication protocol so as to encrypt subsequent communication data.
Step 1230: The data encryption key is applied in communication between the new node and other nodes in the domain so as to ensure that data are not leaked.

As specified by the G.hn standards, after being powered on, if a G.hn device fails to monitor, within a period of detection time T, an existing network to be accessed, the G.hn device may establish a domain and the G.hn device functions as a DM of the established domain, and then forms a domain with other new G.hn devices.

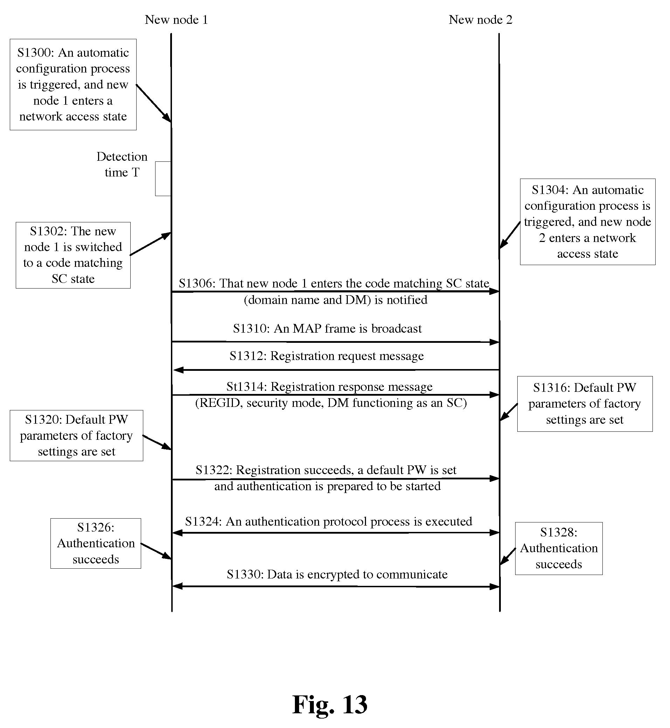

Fig. 13 is the third flowchart of a method for accessing a secure network according to an example embodiment of the present disclosure, which is a process in which two G.hn devices that have not accessed any network establish a new network by using an access method of automatic parameter configuration. As shown in Fig. 13, the flow includes the following steps:
Step 1300: An automatic configuration process is triggered on new node 1 and new node 1 enters a network access state.

A notification message from other nodes indicating that other nodes enter a code matching SC state is not received within a period of detection time T and new node 1 functions as a DM to establish a new network and executes Step 1302 subsequently.

Step 1302: New node 1 is switched to an SC state.

Step 1304: The automatic configuration process is triggered on new node 2 and new node 2 enters a network access state.

Step 1306: Node 1 in the SC state sends a notification message indicating that node 1 enters the SC state. The notification message includes domain name information of a domain established by node 1.

Step 1310: Node 1 functions as a DM to broadcast an MAP frame periodically, and the MAP frame includes domain name information corresponding to the DM.

Step 1312 to Step 1330 are the same as the flow in Fig. 12.

The foregoing embodiments and example embodiments do no change a pre-shared PW-based authentication protocol process specified in existing G.hn standards, thus the interoperability between a G.hn product implemented not according to the foregoing embodiments or example embodiments on the market and a G.hn product implemented according to the method is not affected. If working in a security mode that a user configures a Domain Name and a PW parameter value, the G.hn product implemented according to the foregoing embodiments and example embodiments has the same configuration and operation process as that of the existing G.hn product and follows a flow specified by the existing G.hn standards.

Obviously, those skilled in the art should understand that the components or steps of the present disclosure may be implemented by general computing devices and centralized on a single computing device or distributed on a network consisting of multiple computing devices. Optionally, the components or steps may be implemented by program codes executable by a computing device, so that they may be stored in a storage device and executed by the computing device, and in some cases, the steps as illustrated or described may be implemented according to sequences different from those described herein, or they may be implemented by respectively fabricating them into integrated circuit components or by fabricating multiple components or steps in the components or steps into a single integrated circuit component. By doing so, the present disclosure is not limited to any specific combination of hardware and software.

The above are only preferred embodiments of the present disclosure, but are used for limiting the present disclosure. For those skilled in the art, the present disclosure may have various modifications and changes. Any modifications, equivalent replacements, improvements and the like made within the spirit and principles of the present disclosure shall be included in the scope of protection of the present disclosure.

## Claims

1. A method for accessing a secure network, comprising:
triggering, by a new node which intends to access the secure network, a function of configuring security parameters automatically;
accessing, by the new node, the secure network according to the security parameters configured automatically.

2. The method according to claim 1, wherein accessing, by the new node, the secure network according to the security parameters configured automatically comprises:
detecting, by the new node, whether there is a secure network satisfying a preset access condition in a preset period of time;
when the secure network satisfying the preset access condition is detected in the preset period of time, executing, by the new node according to interaction with a first node in the detected secure network, registration and authentication flows of accessing the secure network; and/or
when the secure network satisfying the preset access condition is not detected in the preset period of time, establishing, by the new node functioning as a Domain Master, DM, a secure network.

3. The method according to claim 2, wherein executing, by the new node according to the interaction with the first node in the detected secure network, the registration and authentication flows of accessing the secure network comprises:
after receiving a notification message sent from the first node, executing, by the new node, the registration flow of accessing the secure network, wherein the notification message is used for notifying the new node that the first node has entered a Security Controller, SC, state configured automatically;
after receiving a registration success message, executing, by the new node, the authentication flow of accessing the secure network.

4. A method for accessing a secure network, comprising:
triggering, by a first node in the secure network, a function of configuring security parameters automatically;
sending, by the first node, a first notification message to a new node which intends to access the secure network, wherein the first notification message is used for notifying the new node that the first node has entered a Security Controller, SC, state configured automatically, and the new node having also triggered the function of configuring security parameters automatically accesses the secure network according to the security parameters configured automatically.

5. The method according to claim 4, wherein after sending, by the first node, the first notification message to the new node which intends to access the secure network, the method further comprises:
determining, by the first node, that registration for the new node to access the secure network is carried out successfully;
sending, by the first node, a second notification message to the new node, wherein the second notification message is used for notifying that the registration for the new node to access the secure network is carried out successfully.

6. The method according to claim 4, wherein when the first node is not a Domain Master, DM, after triggering, by the first node in the secure network, the function of configuring the security parameters automatically, the method further comprises:
sending a third notification message to the DM in the secure network, wherein the third notification message is used for notifying the DM that the first node has entered the SC state configured automatically.

7. A device for accessing a secure network, applied in a new node which intends to access the secure network, comprising:
a first triggering component, configured to trigger a function of configuring security parameters automatically;
a first accessing component, configured to access the secure network according to the security parameters configured automatically.

8. The device according to claim 7, wherein the first accessing component comprises:
a first detecting element, configured to detect whether there is a secure network satisfying a preset access condition in a preset period of time;
a first executing element, configured to execute, when the secure network satisfying the preset access condition is detected in the preset period of time and according to interaction with a first node in the detected secure network, registration and authentication flows of accessing the secure network; and/or
a first establishing element, configured to function as a Domain Master, DM, to establish a secure network when the secure network satisfying the preset access condition is not detected in the preset period of time.

9. The device according to claim 8, wherein the first executing element comprises:
a first executing sub-element, configured to execute, after receiving a notification message sent from the first node, the registration flow of accessing the secure network, wherein the notification message is used for notifying the new node that the first node has entered a Security Controller, SC, state configured automatically;
a second executing sub-element, configured to execute, after receiving a registration success message, the authentication flow of accessing the secure network.

10. A device for accessing a secure network, applied in a first node in the secure network, comprising:
a second triggering component, configured to trigger a function of configuring security parameters automatically;
a first sending component, configured to send a first notification message to a new node which intends to access the secure network, wherein the first notification message is used for notifying the new node that the first node has entered a Security Controller, SC, state configured automatically; and the new node having also triggered the function of configuring security parameters automatically accesses the secure network according to the security parameters configured automatically.

11. The device according to claim 10, wherein the device further comprises:
a first determining component, configured to determine, after the first node sends the first notification message to the new node which intends to access the secure network, that registration for the new node to access the secure network is carried out successfully;
a second sending component, configured to send a second notification message to the new node, wherein the second notification message is used for notifying that the registration for the new node to access the secure network is carried out successfully.

12. The device according to claim 10, wherein the device further comprises:
a third sending component, configured to send, when the first node is not a Domain Master, DM, and after the first node in the secure network triggers the function of configuring the security parameters automatically, a third notification message to the DM in the secure network, wherein the third notification message is used for notifying the DM that the first node has entered the SC state configured automatically.
